# FASCICULE DE BREVET EUROPEEN

(11) **EP 0 817 744 B1**
(45) Date de publication et mention de la délivrance du brevet: **08.09.1999**
(21) Numéro de dépôt: 96909205.5
(22) Date de dépôt: 27.03.1996
(51) Int. Cl.: B64G 1/44

(54) **DISPOSITIF POUR L'ORIENTATION D'UN PANNEAU SOLAIRE D'ENGIN SPATIAL ET ENGIN AINSI EQUIPE**
VORRICHTUNG ZUM AUSRICHTEN VON EINEM SOLARPANEEL EINES RAUMFAHRZEUGES UND DAMIT AUSGERÜSTETES RAUMFAHRZEUG
DEVICE FOR ADJUSTING A SOLAR PANEL ON A SPACECRAFT, AND SPACECRAFT COMPRISING SAME

(30) Priorité: 28.03.1995 FR 9503610
(43) Date de publication de la demande: 14.01.1998
(73) Titulaire: CENTRE NATIONAL D'ETUDES SPATIALES, 75001 Paris (FR)
(72) Inventeur: CUSSAC, Thibery, F-31500 Toulouse (FR)
(74) Mandataire: Schrimpf, Robert
(86) Numéro de dépôt international: FR9600454
(87) Numéro de publication internationale: WO9630259

(56) Documents cités:
- US-A- 3 311 322
- US-A- 3 635 015
- US-A- 4 561 614

## Description

La présente invention concerne le domaine spatial et plus particulièrement un dispositif pour l'orientation d'un panneau solaire équipant un engin spatial, tel qu'un satellite.

La puissance électrique délivrée par un panneau solaire dépend notamment de sa surface et de l'angle d'incidence des rayons solaires sur le panneau. On définit le rendement surfacique d'un panneau solaire comme étant la puissance électrique produite par unité de surface du panneau. Lorsqu'un panneau solaire est fixé sur le corps d'un satellite sans possibilité de modifier l'orientation relative du panneau par rapport au corps du satellite, le rendement surfacique dépend directement de l'orientation du satellite vis-à-vis du soleil. Compte tenu du fait que l'orientation du satellite change quand ce dernier parcourt son orbite, le rendement surfacique moyenné sur la durée d'une révolution est finalement assez faible.

On a proposé, pour augmenter le rendement surfacique moyen, de monter le panneau solaire de façon articulée sur le corps du satellite et d'orienter le panneau, au mieux, par rapport au flux solaire incident, au moyen d'un ou de plusieurs moteurs électriques et de leurs électroniques de commande pilotées par une centrale de traitement à bord du satellite (qui gère l'ensemble des équipements du satellite). Le bon fonctionnement du dispositif d'orientation dépend ainsi de celui des électroniques de commande et de la centrale de traitement à bord du satellite ; cela présente un inconvénient dans la mesure où une défaillance de l'un de ces éléments peut causer une baisse de la production d'énergie électrique et l'arrêt à terme de tous les équipements électriques du satellite. Un autre inconvénient réside dans la complexité du dispositif d'orientation et le risque de pannes associé.

On a également proposé un dispositif comportant un mécanisme d'entraînement thermosensible pour l'orientation d'une partie mobile par rapport à une partie fixe d'un engin spatial, ce mécanisme étant propre à provoquer un déplacement de la partie mobile relativement à la partie fixe en fonction de l'incidence des rayons solaires sur l'engin et conçu pour prendre de lui-même un certain déplacement sous l'effet de sa température, ledit mécanisme étant relié à la partie mobile de sorte que ladite rotation soit transmise à la partie mobile (US-A-3311322).

On a aussi proposé un dispositif pour l'orientation d'un panneau solaire relié de façon articulée à un objet fixe, le dispositif comportant un mécanisme d'entraînement thermosensible propre à provoquer un déplacement du panneau relativement au corps de l'objet fixe en fonction de la direction d'incidence des rayons solaires sur l'objet fixe, ledit mécanisme étant relié au panneau de sorte que ladite rotation soit transmise au panneau (US-A-3635015).

L'invention a pour objet un dispositif d'orientation dont le mécanisme d'entraînement soit simple et apte à changer d'état de lui-même sous l'effet de sa température sans intervention de servomécanismes ultérieurs.

La présente invention a pour objet un dispositif pour l'orientation d'un panneau solaire tel que defini dans la revendication 1.

Dans une réalisation préférée de l'invention, ledit mécanisme d'entraînement est tel que defini dans la revendication 2.

Dans une réalisation préférée de l'invention, le mécanisme d'entraînement est constitué en un alliage à mémoire de forme à double effet.

Dans une réalisation préférée de l'invention, le panneau est monté à pivotement sur le corps de l'engin autour d'un axe de rotation, et ledit mécanisme d'entraînement est une barre de torsion allongée suivant cet axe de rotation, cette barre étant reliée à une extrémité axiale au corps de l'engin et à l'autre extrémité axiale au panneau, le changement d'état de la barre s'accompagnant d'un changement de forme entraînant une rotation relative de ses extrémités et le basculement du panneau.

Dans une réalisation préférée de l'invention, le dispositif comporte un cache disposé autour du mécanisme d'entraînement de manière à masquer les rayons solaires incidents pour un ensemble donné de directions d'incidence des rayons solaires sur l'engin.

Dans une réalisation préférée de l'invention, le cache est propre à transmettre par couplage radiatif, vers le mécanisme d'entraînement une part importante de l'énergie solaire qu'il reçoit, et ceci pour un ensemble donné de directions d'incidence des rayons solaires sur l'engin.

L'invention a aussi pour objet un engin spatial équipé d'un dispositif d'orientation tel que précité.

D'autres caractéristiques et avantages de la présente invention apparaîtront à la lecture de la description détaillée qui va suivre, d'un exemple de réalisation non limitatif de l'invention, et à l'examen du dessin annexé sur lequel :
- la figure 1 montre de façon schématique différentes orientations du satellite vis-à-vis des rayons solaires incidents, lors d'une révolution,
- la figure 2 montre, pour comparaison, la puissance électrique délivrée par un couple de panneaux solaires fixes sur le corps d'un satellite et celle délivrée par un couple de panneaux solaires montés à déplacement sur le corps du satellite et entraînés en déplacement par des mécanismes d'entraînement conformément à l'invention, la puissance (en Watts) étant indiquée en ordonnées et le temps (en minutes) en abscisses,
- les figures 3 et 4 sont deux vues en perspective montrant partiellement un panneau solaire et le corps du satellite sur lequel il est articulé, dans deux positions correspondant respectivement à deux états du mécanisme d'entraînement, et
- la figure 5 est une vue de profil du panneau et du corps du satellite selon la flèche V de la figure 3.

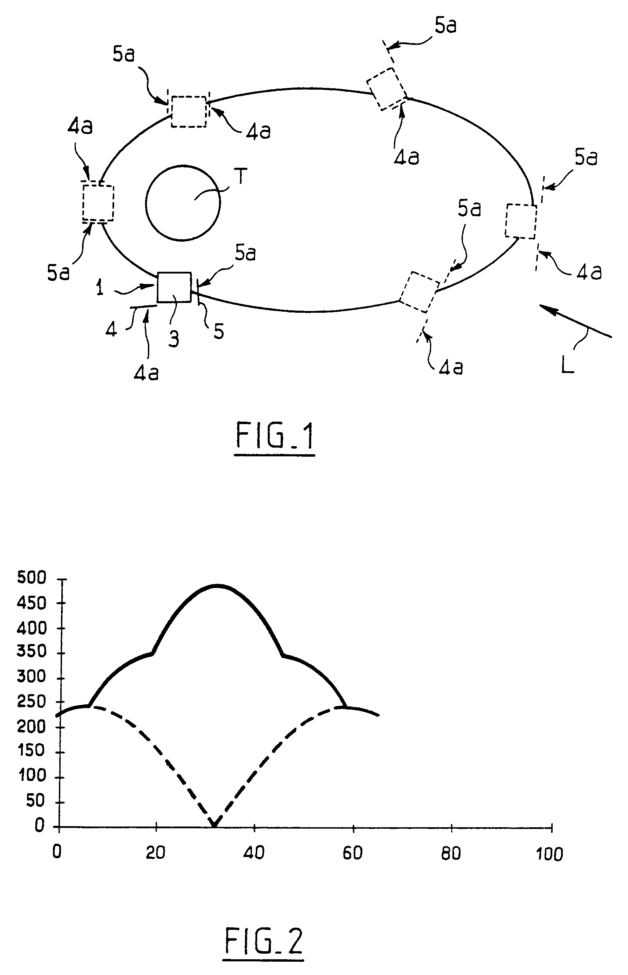

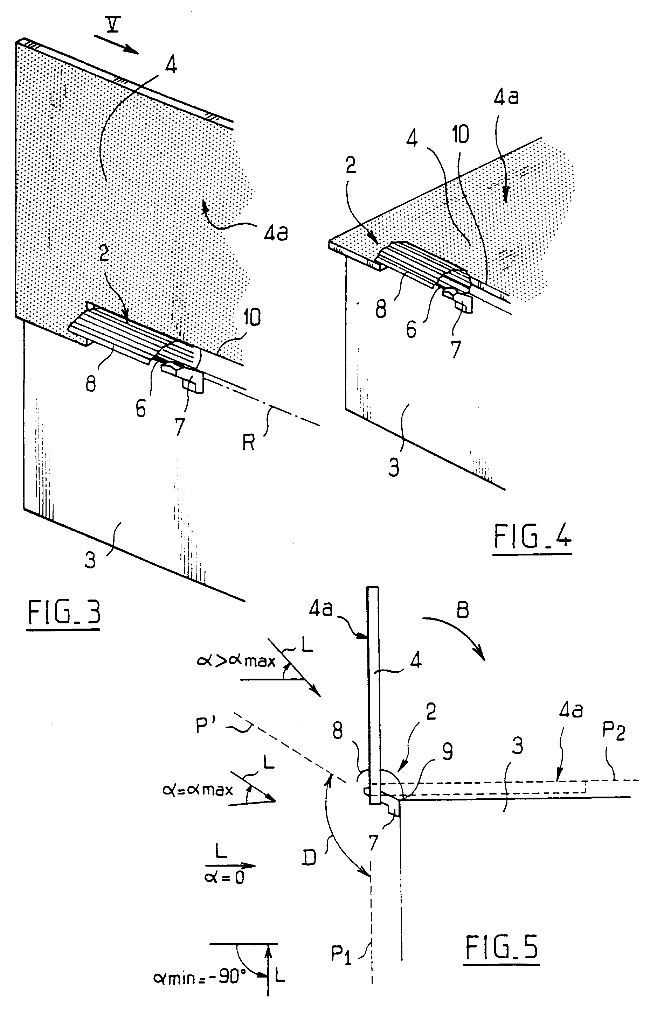

On a représenté sur la figure 1 un satellite 1 en orbite autour de la terre T à six instants différents au cours d'une révolution. Il s'agit dans l'exemple décrit d'un satellite placé sur une orbite géocentrique faiblement inclinée. La flèche L indique la direction des rayons solaires. Le satellite 1 comporte dans l'exemple décrit un corps 3 et deux panneaux solaires 4, 5 respectivement reliés de façon atticulée à deux faces opposées du corps 3. Les panneaux 4 et 5 sont montés à pivotement autour d'axes de rotation parallèles (seul l'axe de rotation R du panneau 4 est représenté sur les figures). Chaque panneau 4, 5 peut pivoter autour de son axe de rotation entre une position où il est déployé et une position où il est replié, le passage d'une position à l'autre s'effectuant par une rotation de 90°, comme représenté sur les figures 3 et 4. Chaque panneau 4, 5 présente sur une face 4a, 5a, dite active, des cellules solaires propres à générer de l'électricité lorsqu'éclairées par le soleil. Ces cellules sont disposées sur la face du panneau qui est tournée vers l'extérieur lorsque le panneau est replié contre le corps du satellite.

Le basculement d'un panneau 4, 5 d'une position vers l'autre est commandé par un mécanisme d'entraînement 2, comprenant dans l'exemple décrit une barre de torsion 6 en un alliage à mémoire de forme à double effet, allongée suivant l'axe de pivotement du panneau. La barre de torsion 6 sert à la fois de moteur et de pivot. Elle est réalisée de façon connue en soi à partir d'un alliage titane-nickel ou à partir de tout autre alliage à mémoire de forme à double effet, connu de l'homme du métier, par exemple un alliage à base de cuivre. Selon sa température, la barre de torsion 6 prend deux états. Plus précisément, lorsque la température est inférieure à une première température de transition T₁ (qui peut être typiquement de l'ordre de 0°C), la barre de torsion 6 présente une forme correspondant à un premier état, et lorsque la température de la barre de torsion 6 est supérieure à une deuxième température de transition T₂ (qui peut être typiquement de l'ordre de 60°C), la barre de torsion 6 présente une forme correspondant à un deuxième état, qui diffère de la première forme par une rotation relative de 90° des extrémités de la barre de torsion 6 autour de son axe longitudinal. Lorsque la température de la barre de torsion 6 s'élève, à partir d'une température de départ inférieure à la première température de transition T₁, la barre de torsion 6 garde son premier état jusqu'à ce que la température dépasse la deuxième température de transition T₂. Quand la température redescend à partir d'une température de départ supérieure à la deuxième température de transition T₂, la barre de torsion 6 conserve son deuxième état tant que la température reste supérieure à la première température de transition T₁. En reliant la barre de torsion 6 à une extrémité axiale à un support fixe 7 solidaire du corps 3 du satellite et à l'autre extrémité axiale au panneau associé, le changement d'état de la barre de torsion 6 entraîne en basculement le panneau.

Le changement de température de la barre de torsion 6 est provoqué dans l'exemple décrit par le changement de la direction L des rayons solaires relativement à un repère lié au satellite. Sur la figure 5, cette direction L est repérée par l'angle d'incidence α. Lorsque l'angle α est compris entre αₘᵢₙ et αₘₐₓ sur la figure 5, c'est-à-dire lorsque les rayons solaires arrivent dans le dièdre D, d'arête l'axe de rotation du panneau et délimité par le plan P₁ de la face active du panneau en position déplié et le plan P', bissecteur du plan P₁ et du plan P₂ de la face active du panneau lorsqu'il est replié, la barre de torsion 6 est éclairée et sa température est supérieure à la deuxième température de transition T₂. On remarquera'que lorsque les rayons solaires arrivent dans le dièdre D, le rendement surfacique du panneau est plus élevé lorsque ce dernier est déployé que lorsqu'il est replié. La barre de torsion 6 est disposée de manière à être dans un état correspondant au déploiement du panneau lorsque sa température est supérieure à la deuxième température de transition T₂. Dans l'exemple décrit, αₘᵢₙ = - 90° et αₘₐₓ = 45°.

Un cache 8 est agencé autour de la barre de torsion 6 pour faire écran aux rayons solaires incidents lorsque l'angle α est supérieur à αₘₐₓ, c'est-à-dire lorsque la direction L des rayons solaires franchit le plan P' (dans le sens de repliement du panneau) et n'arrive plus sur la barre de torsion 6 par le dièdre D. Alors, la barre de torsion 6 n'est plus éclairée et sa température chute au-dessous de la première température de transition T₁, ce qui provoque un changement d'état de la barre de torsion 6 et le repliement du panneau (selon la flèche B de la figure 5). On notera que lorsque le panneau est replié, après que la direction L des rayons solaires ait franchi le plan P', l'angle d'incidence des rayons solaires sur le panneau est moindre que si le panneau était resté déployé, de sorte que le rendement surfacique que l'on obtient après pivotement du panneau est meilleur que si aucune rotation du panneau n'était intervenue.

Le cache 8 se présente dans l'exemple décrit sous la forme d'une paroi cylindrique de génératrice parallèle à l'axe de pivotement R du panneau. La longueur du cache 8, mesurée selon cet axe, est au moins égale à la longueur de la barre de torsion 6. Le cache 8 est fixé par un bord longitudinal 9 sur la face du corps 3 contre laquelle se rabat le panneau. Le panneau 4 est découpé en créneau sur son bord 10 articulé sur le corps 3 pour le passage du cache 8. Ce cache 8 est concave vers le dièdre D. Ses propriétés thermiques, tout comme celles de la barre de torsion 6, doivent être adaptées par tous moyens connus de l'homme du métier de façon à obtenir les variations de température nécessaires au changement d'état de l'alliage à mémoire de forme en fonction de la position du soleil. Dans l'exemple décrit, on limite les échanges par rayonnement et par conduction avec le milieu extérieur (au moyen par exemple d'une isolation de la partie externe du cache) et avec le satellite (par l'utilisation de matériaux isolants dans les pièces de fixation de la barre et du cache sur le satellite) et l'on cherche à obtenir un couplage radiatif maximum du cache 8 vers la barre de torsion 6 à l'aide de peintures ou de traitements de surface adéquats.

A titre indicatif, on a représenté sur la figure 2 l'évolution de la puissance électrique délivrée par un générateur solaire conforme à l'art antérieur (courbe en pointillés), du type comprenant deux panneaux fixés sur le corps d'un satellite (supposé parallélipipédique) et par un générateur solaire conforme à l'invention (courbe en trait plein), comprenant deux panneaux articulés sur le corps du satellite et propres à basculer de 90° lors du changement d'état d'un alliage à mémoire de forme à double effet, conformément à ce qui a été décrit précédemment. Les panneaux présentent une surface de 1 m² chacun et l'orbite est de périgée 400 km d'apogée 1 000 km et d'inclinaison 7° sur le plan équatorial. Le gain de puissance apporté par l'invention permet de réduire la surface des panneaux par rapport aux générateurs connus à panneaux fixes. L'homme du métier notera, à l'examen comparé des courbes représentées sur la figure 2 que, grâce à l'invention, on peut diminuer d'un facteur deux la surface des panneaux solaires pour une puissance électrique à fournir donnée, par rapport à un générateur conforme à l'état de la technique, à panneaux fixes. La puissance délivrée par des panneaux orientés conformément à l'invention n'est nulle que lors des passages en éclipse, à la différence d'un générateur à panneaux fixes, pour lequel la puissance délivrée s'annule à la moitié de l'intervalle de temps séparant deux éclipses consécutives. L'invention permet avantageusement de réduire le nombre de cycles de décharge de la batterie alimentée par les panneaux solaires, donc d'augmenter sa durée de vie et celle du satellite.

Le dispositif d'orientation selon l'invention qui vient d'être décrit est entièrement autonome, particulièrement robuste et fiable.

Bien entendu, l'invention n'est pas limitée à cet exemple de réalisation. On peut notamment équiper, avec un dispositif d'orientation conforme à l'invention, un engin spatial autre qu'un satellite, que l'orbite soit une orbite terrestre ou une orbite autour d'un autre astre ou autour du soleil. Le basculement angulaire des panneaux peut être différent de 90°, et l'on peut équiper l'engin de panneaux fixes et de panneaux mobiles suivant l'invention. Dans l'exemple décrit, le mécanisme d'entraînement comporte une barre de torsion en alliage à mémoire de forme à double effet. On peut, sans sortir du cadre de l'invention, remplacer la barre de torsion par des ressorts de traction ou des lames de flexion en alliage à mémoire de forme à double effet, ou encore utiliser à la place d'un matériau à mémoire de forme à double effet un assemblage de plusieurs éléments constitués de matériaux présentant des coefficients de dilatation thermique différents, cet assemblage étant réalisé de manière à transformer une variation de température de l'assemblage en un déplacement de ses éléments constitutifs capable de provoquer le basculement d'un panneau. Dans l'exemple décrit, l'élévation de la température du mécanisme d'entraînement est provoquée par son réchauffement sous l'action directe des rayons solaires incidents. En variante, ou additionnellement, la chaleur peut être apportée au moyen d'un conducteur thermique reliant la barre de torsion à un élément placé à distance de celle-ci sur le corps du satellite, la température de cet élément dépendant de l'orientation du satellite vis-à-vis du soleil. Dans une autre variante encore, le réchauffement de la barre de torsion peut se faire au moyen d'une résistance chauffante couplée thermiquement à la barre et alimentée en énergie électrique par des cellules solaires disposées et masquées conformément à l'invention sur le corps du satellite. On peut également effectuer le déplacement d'un panneau au moyen de plusieurs mécanismes d'entraînement élémentaires susceptibles de prendre chacun deux états en fonction de leur température, ces mécanismes d'entraînement élémentaires étant agencés en cascade de manière à cumuler leurs effets, ceci en vue de disposer de plusieurs degrés de basculement du panneau permettant d'améliorer encore davantage le rendement surfacique.

## Revendications

1. Dispositif (2) pour l'orientation d'une partie mobile (4 ; 5) équipant un engin spatial tel qu'un satellite (1), le dispositif (2) comportant un mécanisme d'entraînement (6) thermosensible propre à provoquer un déplacement du panneau relativement au corps de l'engin en fonction de la direction d'incidence des rayons solaires sur l'engin et conçu pour prendre de lui-même un certain déplacement sous l'effet de sa température, ledit mécanisme étant relié à la partie mobile en sorte que ledit déplacement soit transmis à la partie mobile, caractérisé en ce que ladite partie mobile est un panneau solaire relié de façon articulée au corps de l'engin spatial et en ce que ledit mécanisme d'entraînement est conçu pour prendre de lui-même sous l'effet de sa température l'un ou l'autre de deux états qui diffèrent l'un de l'autre par une rotation d'un angle déterminé, le premier état étant pris pour les températures inférieures à une première valeur (T₁) et le deuxième état étant pris pour les températures supérieures à une deuxième valeur (T₂), ledit mécanisme d'entraînement étant conçu de manière à ce qu'un changement prédéterminé de la direction d'incidence des rayons solaires sur l'engin s'accompagne d'une modification de la température du mécanisme d'entraînement faisant passer cette température d'une valeur inférieure à ladite première valeur à une température supérieure à ladite deuxième valeur ou vice-versa.

2. Dispositif selon la revendication 1, caractérisé en ce que ledit mécanisme d'entraînement est propre à prendre deux états en fonction de sa température et en ce qu'il est disposé sur l'engin de manière à ce qu'un changement prédéterminé de la direction d'incidence des rayons solaires sur l'engin s'accompagne d'une variation de la température du mécanisme d'entraînement et provoque une modification de l'état de ce dernier et de l'orientation du panneau tendant à diminuer l'angle d'incidence des rayons solaires sur le panneau.

3. Dispositif selon la revendication 2, caractérisé en ce que le mécanisme d'entraînement (6) est constitué en un alliage à mémoire de forme à double effet.

4. Dispositif selon la revendication 3, caractérisé en ce que le panneau (4) est monté à pivotement sur le corps (3) de l'engin autour d'un axe de rotation (R) et en ce que ledit mécanisme d'entraînement est une barre de torsion (6) allongée suivant l'axe de rotation (R), cette barre étant reliée à une extrémité axiale au corps de l'engin et à l'autre extrémité axiale au panneau, le changement d'état de la barre s'accompagnant d'un changement de forme entraînant une rotation relative de ses extrémités et le basculement du panneau.

5. Dispositif selon l'une des revendications 2 à 4, caractérisé en ce que le mécanisme d'entraînement est relié thermiquement à un élément disposé à distance du mécanisme d'entraînement sur le corps de l'engin, et propre à réchauffer, lorsqu' éclairé, ledit mécanisme d'entraînement.

6. Dispositif selon l'une des revendications 2 à 5, caractérisé en ce que le mécanisme d'entraînement est couplé thermiquement à une résistance chauffante propre à réchauffer le mécanisme d'entraînement lorsqu'alimentée en énergie électrique par des cellules solaires placées sur le corps de l'engin.

7. Dispositif selon l'une des revendications 1 à 4, caractérisé en ce qu'il comporte un cache (8) disposé autour du mécanisme d'entraînement de manière à masquer les rayons solaires incidents pour un ensemble donné de directions d'incidence des rayons solaires sur l'engin.

8. Dispositif selon la revendication 7, caractérisé en ce que le cache (8) est propre à transmettre, par couplage radiatif, vers le mécanisme d'entraînement une part importante de l'énergie solaire qu'il reçoit, et ceci pour un ensemble donné (D) de directions d'incidence des rayons solaires sur l'engin.

9. Dispositif selon l'une des revendications 1 à 8, caractérisé en ce que le changement d'état du mécanisme d'entaînement intervient après que la direction des rayons solaires relativement à l'engin ait franchi un plan (P') bissecteur de deux plans (P₁, P₂) coïncidant respectivement avec les positions que le panneau occupe avant et après basculement.

10. Engin spatial équipé d'un dispositif tel que défini à l'une des revendications précédentes.

## Claims

1. A device (2) for angularly positioning a moving part (4; 5) equipping a spacecraft such as a satellite (1), the device (2) comprising a heat-sensitive drive mechanism (6) suitable for causing the panel to be displaced relative to the body of the spacecraft as a function of the direction of incidence of the solar radiation on the spacecraft and designed to be displaced under the effect of its temperature, said mechanism being connected to the moving part so that said displacement is transmitted to the moving part, said device being characterized in that said moving part is a solar panel connected in hinged manner to the body of the spacecraft, and in that said drive mechanism is designed to take up automatically, under the effect of its temperature, one or other of two states which differ from each other by a rotation through a determined angle, the first state being taken up for temperatures lower than a first value (T₁), and the second state being taken up for temperatures higher than a second value (T₂), said drive mechanism being designed so that a predetermined change in the direction of incidence of the solar radiation on the spacecraft is accompanied by a change in the temperature of the drive mechanism causing said temperature to go from a a value lower than said first value to a temperature higher than said second value, or vice versa.

2. A device according to claim 1, characterized in that said drive mechanism is suitable for taking up two states as a function of its temperature, and in that it is disposed on the spacecraft so that a predetermined change in the direction of incidence of the solar radiation on the spacecraft is accompanied by a variation in the temperature of the drive mechanism, and causes a change in the state thereof and in the angular position of the panel tending to reduce the angle of incidence of the solar radiation on the panel.

3. A device according to claim 2, characterized in that the drive mechanism (6) is made of a double-acting shape-memory alloy.

4. A device according to claim 3, characterized in that the panel (4) is mounted to pivot on the body (3) of the spacecraft about an axis of rotation (R), and in that said drive mechanism is a torsion bar (6) that is elongate along the axis of rotation (R), one axial end of the bar being connected to the body of the spacecraft, and the other axial end of the bar being connected to the panel, a change in the state of the bar being accompanied by a change in its shape causing its ends to rotate relative to each other and the panel to tilt.

5. A device according to any one of claims 2 to 4, characterized in that the drive mechanism is connected thermally to an element disposed at a distance from the drive mechanism on the body of the spacecraft, and suitable for heating up said drive mechanism when said element is illuminated.

6. A device according to any one of claims 2 to 5, characterized in that the drive mechanism is coupled thermally to a heating resistor suitable for heating up the drive mechanism when said resistor is fed with electrical energy by solar cells placed on the body of the spacecraft.

7. A device according to any one of claims 1 to 4, characterized in that it is provided with a mask (8) disposed about the drive mechanism so as to mask the incident solar radiation for a given set of directions of incidence of the solar radiation on the spacecraft.

8. A device according to claim 7, characterized in that the mask (8) is suitable for transmitting a large portion of the solar energy it receives to the drive mechanism by radiant coupling, for a given set (D) of directions of incidence of the solar radiation on the spacecraft.

9. A device according to any one of claims 1 to 8, characterized in that a change in the state of the drive mechanism occurs after the direction of the solar radiation relative to the spacecraft crosses a plane (P') bisecting two planes (P₁, P₂) respectively coinciding with the positions taken up by the panel before and after tilting.

10. A spacecraft equipped with a device as defined in any preceding claim.

## Patentansprüche

1. Vorrichtung (2) für die Ausrichtung eines beweglichen Teils (4; 5), mit dem ein Raumfahrzeug, wie zum Beispiel ein Satellit (1) ausgerüstet ist, wobei die Vorrichtung (2) einen wärmeempfindlichen Antriebsmechanismus (6) aufweist, welcher eine Verschiebung des Paneels gegenüber dem Körper des Gerätes entsprechend der Richtung des Einfalls der Sonnenstrahlen auf das Raumfahrzeug bewirken kann und so ausgelegt ist, daß es eigenständig eine bestimmte Verschiebung unter der Einwirkung seiner Temperatur durchführen kann, wobei dieser Mechanismus mit dem beweglichen Teil so verbunden ist, daß diese Verschiebung auf den beweglichen Teil übertragen wird,
**dadurch gekennzeichnet**, **daß**
dieser bewegliche Teil ein Solarpaneel ist, das an dem Körper des Raumfahrzeuges angelenkt ist, und dadurch, daß dieser Antriebsmechanismus so ausgelegt ist daß er eigenständig unter der Einwirkung seiner Temperatur den einen oder anderen Zustand erreichen kann, welche sich untereinander durch eine Rotation um einen bestimmten Winkel unterscheiden, wobei der erste Zustand bei Temperaturen erreicht wird, die unter einem ersten Wert (T₁) liegen, und der zweite Zustand bei Temperaturen erreicht wird, die über einem zweiten Wert (T₂) liegen, wobei dieser Antriebsmechanismus so konzipiert ist, daß eine vorbestimmte Veränderung des Einfalls der Sonnenstrahlen auf das Raumfahrzeug von einer Veränderung der Temperatur des Antriebsmechanismus begleitet wird, wodurch diese Temperatur von einem Wert unterhalb dieses ersten Wertes auf einen Wert ansteigt, der über diesem zweiten Wert liegt oder umgekehrt.

2. Vorrichtung nach Anspruch 1,
**dadurch gekennzeichnet**, **daß**
dieser Antriebsmechanismus geeignet ist, je nach seiner Temperatur zwei Zustände zu erreichen, und dadurch, daß er auf dem Raumfahrzeug so angeordnet ist, daß eine bestimmte Änderung der Richtung des Einfalls der Sonnenstrahlen auf das Raumfahrzeug von einer Veränderung der Temperatur des Antriebsmechanismus begleitet wird und eine Veränderung von dessen Zustand und der Ausrichtung des Paneels bewirkt, wodurch der Einfallswinkel der Sonnenstrahlen auf das Paneel verringert werden kann.

3. Vorrichtung nach Anspruch 2,
**dadurch gekennzeichnet**, **daß**
der Antriebsmechanismus (6) aus einer Memory-Legierung mit Doppeleffekt hergestellt ist.

4. Vorrichtung nach Anspruch 3,
**dadurch gekennzeichnet**, **daß**
das Paneel (4) an dem Körper (3) des Raumfahrzeuges schwenkbar um eine Rotationsachse (R) angeordnet ist, und daß dieser Antriebsmechanismus aus einem Torsionsstab (6) besteht, welcher entlang der Rotationsachse (R) verläuft, wobei dieser Torsionsstab an einem axialen Ende des Körpers des Gerätes und an dem anderen axialen Ende des Paneels befestigt wird, und die Veränderung des Zustands des Torsionsstabes von einer Veränderung seiner Form begleitet wird, die eine relative Rotation seiner Endabschnitte und die Schwenkung des Paneels bewirkt.

5. Vorrichtung nach einem der Ansprüche 2 bis 4,
**dadurch gekennzeichnet**, **daß**
der Antriebsmechanismus thermisch an ein Element angeschlossen ist das im Abstand von diesem Antriebsmechanismus auf dem Körper des Raumfahrzeugs angeordnet und, wenn er beleuchtet wird, geeignet ist diesen Antriebsmechanismus zu erwärmen.

6. Vorrichtung nach einem der Ansprüche 2 bis 5,
**dadurch gekennzeichnet**, **daß**
der Antriebsmechanismus thermisch an einen Heizwiderstand gekoppelt ist der den Antriebsmechanismus erwärmen kann, wenn er mit Hilfe von Solarzellen, die auf dem Körper des Raumfahrzeuges angeordnet sind, mit elektrischer Energie versorgt wird.

7. Vorrichtung nach einem der Ansprüche 2 bis 5,
**dadurch gekennzeichnet**, **daß**
sie eine Verkleidung (8) aufweist welche um den Antriebsmechanismus so angeordnet ist daß sie die einfallenden Sonnenstrahlen in einem bestimmten Gesamtumfang von Einfallsrchtungen der Sonnenstrahlen auf das Raumfahrzeug abschirmt.

8. Vorrichtung nach Anspruch 7,
**dadurch gekennzeichnet**, **daß**
die Verkleidung (8) geeignet ist, durch Kopplung der Strahlen einen großen Teil der von ihr empfangenen Solarenergie an den Antriebsmechanismus weiterzuleiten, und zwar in einem bestimmten Gesamtumfang (D) von Einfallsrchtungen der Sonnenstrahlen auf das Raumfahrzeug.

9. Vorrichtung nach einem der Ansprüche 1 bis 8,
**dadurch gekennzeichnet**, **daß**
die Veränderung des Zustands des Antriebsmechanismus erfolgt, nach dem die Richtung der Sonnenstrahlen gegenüber dem Raumfahrzeug eine Ebene (P') überschritten hat, welche zwei Ebenen (P₁, P₂) schneidet, die jeweils mit den Positionen übereinstimmen, die das Paneel vor und nach der Schwenkung einnimmt.

10. Raumfahrzeug, das mit einer Vorrichtung ausgerüstet ist, wie sie in einem der vorausgegangenen Ansprüche offenbart wurde.
